# EUROPEAN PATENT APPLICATION

(11) **EP 4 593 489 A1**
(43) Date of publication of application: **30.07.2025**
(21) Application number: 22959239.9
(22) Date of filing: 23.09.2022
(51) Int. Cl.: H04W 72/0446, H04L 27/00

(54) **RESOURCE CONFIGURATION METHOD AND DEVICE**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/121044
(87) International publication number: WO 2024/060235

(57) **Abstract**

The present invention provides a resource configuration method and device. The resource configuration method comprises: adjusting first resource information occupied by a first subband, and determining second resource information occupied by the first sub-band after adjustment, wherein the first sub-band is always located in a specified time unit in a time domain, and the transmission direction of the information on the first sub-band is different from the transmission direction of the information on the specified time unit; and sending indication information to a terminal, wherein the indication information is used for determining the second resource information. According to the present invention, resource information occupied by a first sub-band configured on a network side can be dynamically adjusted, such that the flexibility of network side scheduling during full-duplex communication is improved, the system performance of the full-duplex communication is improved, and the availability is high.

## Description

### TECHNICAL FIELD

The present disclosure relates to a field of communication, and in particular, to resource configuration methods and apparatuses.

### BACKGROUND

A full-duplex scheme is studied in a release-18 (Rel-18) full-duplex enhancement project. Specifically, a network side can simultaneously receive and send data in one slot. To implement a full-duplex operation, a base station side needs to configure an uplink (UL) subband for the terminal on a downlink (DL) symbol or the base station needs to configure a DL subband for the terminal on an UL symbol.

Currently, a time division duplexing (TDD) terminal is required as follows:
the terminal can only receive data and cannot send data with the DL symbol;
the terminal can only send data and cannot receive data with the UL symbol;
the terminal may send or receive the data with a semi-static flexible symbol according to the configuration of the base station or dynamic scheduling of the base station; and
the terminal can only receive or send the data with a dynamic flexible symbol according to a dynamic indication of the base station.

Both a semi-static time division duplexing configuration (TDD UL-DL configuration) and a dynamic slot format indication (SFI) are cell level indications. Generally, one carrier is configured for one cell, that is, the TDD UL-DL configuration and the SFI act on all bandwidth parts (BWP) in one carrier configured by the base station.

Because resource information of the configured subband cannot be dynamically adjusted, the flexibility and performance of scheduling of the network side during full-duplex communication are limited.

### SUMMARY

Embodiments of the present disclosure provide resource configuration methods and apparatuses, to overcome problems existing in related technologies.

A resource configuration method is provided according to a first aspect of embodiments of the present disclosure. The method is performed by a base station and includes:
adjusting first resource information occupied by a first subband, to determine second resource information occupied by the first subband after the adjustment, where the first subband in a time domain is always within a specified time unit, and a transmission direction of information on the first subband is different from a transmission direction of the information on the specified time unit; and
sending indication information to a terminal, where the indication information is for determining the second resource information.

A resource configuration method is provided according to the second aspect of embodiments of the present disclosure. The method is performed by a terminal and includes:
receiving indication information sent by a base station, where the indication information is for determining second resource information obtained after first resource information occupied by a first subband is adjusted, where the first subband in a time domain is always within a specified time unit, and a transmission direction of information on the first subband is different from a transmission direction of the information on the specified time unit; and
determining the second resource information based on the indication information.

According to a third aspect of embodiments of the present disclosure, a resource configuration apparatus is provided. The apparatus is applied to a base station and includes:
a first determination module, configured to adjust first resource information occupied by a first subband, to determine second resource information occupied by the first subband after the adjustment, where the first subband in a time domain is always within a specified time unit, and a transmission direction of information on the first subband is different from a transmission direction of the information on the specified time unit; and
a sending module, configured to send indication information to a terminal, where the indication information is for determining the second resource information.

According to a fourth aspect of embodiments of the present disclosure, a resource configuration apparatus is provided. The apparatus is applied to a terminal and includes:
a receiving module, configured to receive indication information sent by a base station, where the indication information is for determining second resource information obtained after first resource information occupied by a first subband is adjusted, where the first subband in a time domain is always within a specified time unit, and a transmission direction of information on the first subband is different from a transmission direction of the information on the specified time unit; and
a second determination module, configured to determine the second resource information based on the indication information.

According to a fifth aspect of embodiments of the present disclosure, a resource configuration apparatus is provided. The resource configuration apparatus includes:
a processor; and
a memory configured to store instructions executable by the processor;
where the processor is configured to perform any one resource configuration method for the base station side.

According to a sixth aspect of embodiments of the present disclosure, a resource configuration apparatus is provided. The resource configuration apparatus includes:
a processor; and
a memory configured to store instructions executable by the processor;
where the processor is configured to perform any one resource configuration method for the terminal side.

Technical solutions provided by the embodiments of the present disclosure may include the following beneficial effects.

In the embodiment of the present disclosure, the base station may dynamically adjust the first resource information occupied by the first subband, to determine second resource information occupied by the first subband after the adjustment, and send indication information to the terminal; and the terminal may determine, based on the indication information, the second resource information occupied by the first subband after the adjustment. The first subband in a time domain is always within a specified time unit, and a transmission direction of information on the first subband is different from a transmission direction of the information on the specified time unit. In the present disclosure, the resource information occupied by the first subband configured by the network side may be dynamically adjusted, which therefore improves the flexibility of scheduling of the network side during the full-duplex communication, improves a system performance of the full-duplex communication, and has a high availability.

It should be understood that the above general description and the detailed description in the following text are only exemplary and explanatory, and cannot limit the present disclosure.

### BRIEF DESCRIPTION OF DRAWINGS

The accompanying drawings here are incorporated into the specification and form a part of this specification, show embodiments conforming to the present disclosure and are used together with the specification to explain principles of the present disclosure.
FIG. 1 is a schematic flowchart of a resource configuration method shown according to an exemplary embodiment.
FIG. 2 is a schematic flowchart of another resource configuration method shown according to an exemplary embodiment.
FIG. 3 is a schematic flowchart of another resource configuration method shown according to an exemplary embodiment.
FIG. 4 is a schematic flowchart of another resource configuration method shown according to an exemplary embodiment.
FIG. 5 is a schematic flowchart of another resource configuration method shown according to an exemplary embodiment.
FIG. 6 is a schematic flowchart of another resource configuration method shown according to an exemplary embodiment.
FIG. 7 is a schematic flowchart of another resource configuration method shown according to an exemplary embodiment.
FIG. 8 is a schematic flowchart of another resource configuration method shown according to an exemplary embodiment.
FIG. 9 is a schematic flowchart of another resource configuration method shown according to an exemplary embodiment.
FIG. 10 is a schematic flowchart of another resource configuration method shown according to an exemplary embodiment.
FIG. 11 is a block diagram of a resource configuration apparatus shown according to an exemplary embodiment.
FIG. 12 is a block diagram of another resource configuration apparatus shown according to an exemplary embodiment.
FIG. 13 is a schematic structural diagram of a resource configuration apparatus shown according to an exemplary embodiment of the present disclosure.
FIG. 14 is a schematic structural diagram of another resource configuration apparatus shown according to an exemplary embodiment of the present disclosure.

### DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with the present disclosure. Rather, they are merely examples of apparatuses and methods consistent with some aspects of the present disclosure as detailed in the appended claims.

Terms used in the present disclosure are only for a purpose of describing specific embodiments, and are not intended to limit the present disclosure. Singular forms, "a/an," "the," and "this," used in the present disclosure and the appended claims are also intended to include majority forms, unless the context clearly indicates other meanings. It should also be understood that the term "and/or" used herein refers to and includes any or all possible combinations of at least one related listed item.

It should be understood that although terms, such as "first," "second," "third," etc., may be used in the present disclosure to describe various information, such information should not be limited by these terms. These terms are only used to distinguish a same type of information from each other. For example, without departing from the scope of the present disclosure, first information may also be referred to as second information, and similarly, the second information may also be referred to as the first information. Depending on the context, the term "if" used herein may be interpreted as "when," "while," or "in response to determining."

It should be noted that, in the present disclosure, the base station side has in advance configured or indicated the first resource information occupied by the first subband for the terminal in a semi-static configuration manner, for example a TDD UL-DL configuration manner, or a dynamic scheduling manner, for example an SFI dynamic indication manner. The first subband in a time domain is always within a specified time unit, and a transmission direction of information on the first subband is different from a transmission direction of the information on the specified time unit.

In the embodiment of the present disclosure, the information includes but is not limited to signaling, signals, data, etc.

In the embodiment of the present disclosure, the specified time unit may be a seamless bidirectional forwarding detection (SBFD) time unit. The information may be transmitted in different transmission directions in the SBFD time unit.

For example, the SBFD time unit is configured by the base station as an uplink time unit, the terminal may receive downlink data in the SBFD time unit, and the base station may send the downlink data in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

The resource configuration method provided in the present disclosure is described firstly from a base station side below.

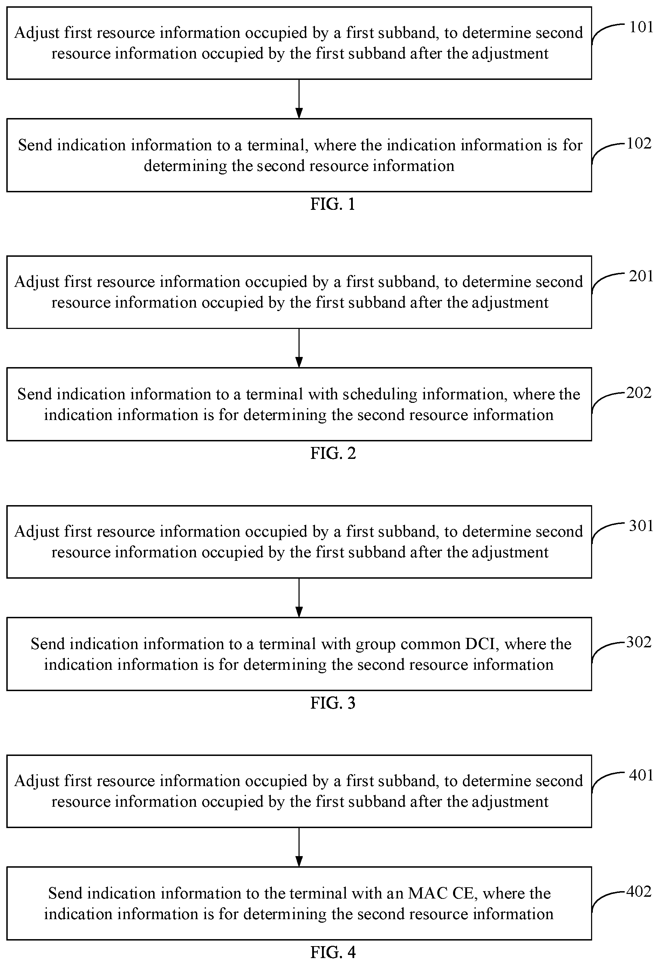

An embodiment of the present disclosure provides a resource configuration method. Referring to FIG. 1, FIG. 1 is a flowchart of a resource configuration method shown according to an embodiment. The method may be performed by a base station. The method may include the following steps 101-102.

At step 101, first resource information occupied by a first subband is adjusted, to determine second resource information occupied by the first subband after the adjustment.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

At step 102, indication information is sent to a terminal, where the indication information is for determining the second resource information.

In a possible implementation, the indication information is the second resource information obtained after the adjustment, that is, the indication information is the second resource information.

In another possible implementation, the base station side may configure in advance, for the terminal, one or more index values available for the first subband and resource information corresponding to each of the index values.

Optionally, the base station may configure, with radio resource control (RRC) signaling, the one or more index values available for the first subband and the resource information corresponding to each of the index values.

For example, in this embodiment of the present disclosure, types of the index values may be resource configuration index values, and resource information corresponding to each of the resource configuration index values may be for example shown in Table 1.

**Table 1**

| Resource configuration index value | Resource information |
|---|---|
| #0 | Time domain resource #0; frequency domain resource #0 |
| #1 | Time domain resource #1; frequency domain resource #1 |
| #2 | Time domain resource #2; frequency domain resource #2 |
| #3 | Time domain resource #3; frequency domain resource #3 |
| ...... | ...... |

The indication information sent by the base station side may be a resource configuration index value used by the first subband after the adjustment.

For example, the resource configuration index value corresponding to the first resource configuration used by the first subband before the adjustment is #1, and the resource configuration index value corresponding to the second resource configuration used by the first subband after the adjustment is #0; therefore, the base station may send the resource configuration index value used by the first subband after the adjustment to the terminal.

It should be noted that a length of the indication information may be log2(M) bits, where M refers to the total number of available resource configuration index values. For example, when M is 4, and the indication information sent by the base station indicates the resource configuration index values used by the first subband after the adjustment, the indication information occupies log24=2 bits.

A relationship of corresponding the bit value of the indication information sent by the base station to the indicated resource configuration index value is for example shown in Table 2.

**Table 2**

| Bit value of indication information | Indicated resource configuration index value |
|---|---|
| 00 | #0 |
| 01 | #1 |
| 10 | #2 |
| 11 | #3 |
| ...... | ...... |

For example, the types of the index values may be subband index values, and resource information corresponding to each of the subband index values is for example shown in Table 3.

**Table 3**

| Subband index value | Resource information occupied by subband |
|---|---|
| Subband #0 | Time domain resource #0; frequency domain resource #0 |
| Subband #1 | Time domain resource #1; frequency domain resource #1 |
| Subband #2 | Time domain resource #2; frequency domain resource #2 |
| Subband #3 | Time domain resource #3; frequency domain resource #3 |
| ...... | ...... |

That is, the base station may configure, for the terminal, one or more available subband index values and resource configuration information corresponding to each of the subband index values with RRC signaling.

Further, the base station may send the indication information to the terminal, where the indication information indicates an activated subband index value after the adjustment.

Of course, a length of the indication information may be log2(N) bits, where N refers to the total number of available subband index values.

A relationship of corresponding the bit value of the indication information sent by the base station to the indicated resource configuration index value is for example shown in Table 4.

**Table 4**

| Bit value of indication information | Subband index value |
|---|---|
| 00 | Subband #0 |
| 01 | Subband #1 |
| 10 | Subband #2 |
| 11 | Subband #3 |
| ...... | ...... |

The above description is merely an exemplary explanation, and in an actual application, the indication information may further indicate other content, so that the terminal side determines, based on the indication information, the second resource information occupied by the first subband after the adjustment, which is not limited in the present disclosure.

In the above embodiment, the resource information occupied by the first subband configured by the network side may be dynamically adjusted, which improves the flexibility of scheduling of the network side during the full-duplex communication, improves a system performance of the full-duplex communication, and has a high availability.

In some optional embodiments, referring to FIG. 2, FIG. 2 is a flowchart of a resource configuration method shown according to an embodiment. The method may be performed by a base station. The method may include the following steps 201-202.

At step 201, first resource information occupied by a first subband is adjusted, to determine second resource information occupied by the first subband after the adjustment.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

At step 202, indication information is sent to a terminal with scheduling information, where the indication information is for determining the second resource information.

In a possible implementation, the base station may send the indication information to the terminal with uplink grant (UL grant) information.

In a possible implementation, the base station may send the indication information to the terminal with the uplink grant information for scheduling a physical uplink shared channel (PUSCH).

In a possible implementation, the base station may send the indication information to the terminal with DL assignment information.

In a possible implementation, the base station sends the indication information to the terminal with the DL assignment information for scheduling a physical downlink shared channel (PDSCH).

In a possible implementation, the indication information is second resource information obtained after the adjustment, that is, the indication information is the second resource information.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, types of the index values are resource configuration index values, and resource information corresponding to each of the resource configuration index values is for example shown in the above Table 1. Correspondingly, the indication information sent by the base station may be a resource configuration index value used by the first subband after the adjustment. Specific implementations have been described in the above embodiments, and will be not repeated herein.

For example, the types of the index values are subband index values, and resource information corresponding to each of the subband index values is for example shown in the above Table 3.

Correspondingly, the indication information sent by the base station side may be an activated subband index value after the adjustment. Specific implementations have been described in the above embodiments, and will be not repeated herein.

In the above embodiment, the base station may send the indication information to the terminal with the scheduling information, so that the terminal determines, based on the indication information, the second resource information occupied by the first subband after the adjustment. In the present disclosure, the resource information occupied by the first subband configured by the network side may be dynamically adjusted, which improves the flexibility of scheduling of the network side during the full-duplex communication, improves a system performance of the full-duplex communication, and has a high availability.

In some optional embodiments, referring to FIG. 3, FIG. 3 is a flowchart of a resource configuration method shown according to an embodiment. The method may be performed by a base station. The method may include the following steps 301-302.

At step 301, first resource information occupied by a first subband is adjusted, to determine second resource information occupied by the first subband after the adjustment.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

At step 302, indication information is sent to a terminal with group common downlink control information (DCI), where the indication information is for determining the second resource information.

In the embodiment of the present disclosure, the base station may send the indication information to the terminal with the group common DCI.

In a possible implementation, the group common DCI is of the first format, and may be scrambled by a radio network temporary identity (RNTI) of the specified time unit.

The first format is a dedicated DCI format for transmitting the indication information, that is, the first format may be different from a DCI format stipulated by an existing protocol, and may be a corresponding DCI format separately defined for transmitting the indication information. The base station sends the indication information to the terminal with the group common DCI of the first format.

In addition, when the indication information is transmitted with the group common DCI of the first format, the group common DCI may be scrambled by an RNTI of the specified time unit, for example, an SBFD-RNTI. In this way, the terminal side determines, based on the SBFD-RNTI, that the group common DCI is a group common DCI for transmitting the indication information.

In another possible implementation, the group common DCI may multiplex a second format, and the second format may be an existing DCI format in a protocol, for example, a DCI format 0_2.

Of course, the group common DCI for transmitting the indication information may also multiplex other DCI formats in the protocol, which is not limited in the present disclosure.

In a possible implementation, to ensure a reliability of transmission of the indication information, after the terminal receives the indication information sent with the group common DCI, the terminal may report a hybrid automatic repeat request-acknowledge (HARQ-ACK) result of the group common DCI to the base station.

The base station determines, based on the HARQ-ACK result, whether the terminal receives the group common DCI, and if the terminal does not successfully receive the group common DCI, the base station may send the group common DCI carrying the indication information to the terminal again in a repeat manner.

In a possible implementation, the indication information is the second resource information obtained after the adjustment, that is, the indication information is the second resource information.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

The base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

In the above embodiment, the base station may send the indication information to the terminal with the group common downlink control information, so that the terminal determines, based on the indication information, the second resource information occupied by the first subband after the adjustment. In the present disclosure, the resource information occupied by the first subband configured by the network side may be dynamically adjusted, which improves the flexibility of scheduling of the network side during the full-duplex communication, improves a system performance of the full-duplex communication, and has a high availability.

In some optional embodiments, referring to FIG. 4, FIG. 4 is a flowchart of a resource configuration method shown according to an embodiment. The method may be performed by a base station. The method may include the following steps 401-402.

At step 401, first resource information occupied by a first subband is adjusted, to determine second resource information occupied by the first subband after the adjustment.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

At step 402, indication information is sent to the terminal with a media access control control element (MAC CE), where the indication information is for determining the second resource information.

In the embodiment of the present disclosure, the base station may send the indication information to the terminal with the MAC CE.

In a possible implementation, the indication information is the second resource information obtained after the adjustment, that is, the indication information is the second resource information.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, types of the index values are resource configuration index values, and resource information corresponding to each of the resource configuration index values is for example shown in the above Table 1. Correspondingly, the indication information sent by the base station may be a resource configuration index value used by the first subband after the adjustment. Specific implementations have been described in the above embodiments, and will be not repeated herein.

For example, the types of the index values are subband index values, and resource information corresponding to each of the subband index values is for example shown in the above Table 3.

Correspondingly, the indication information sent by the base station side may be an activated subband index value after the adjustment. Specific implementations have been described in the above embodiments, and will be not repeated herein.

In the above embodiment, the base station may send the indication information to the terminal with the MAC CE, so that the terminal determines, based on the indication information, the second resource information occupied by the first subband after the adjustment. In the present disclosure, the resource information occupied by the first subband configured by the network side may be dynamically adjusted, which improves the flexibility of scheduling of the network side during the full-duplex communication, improves a system performance of the full-duplex communication, and has a high availability.

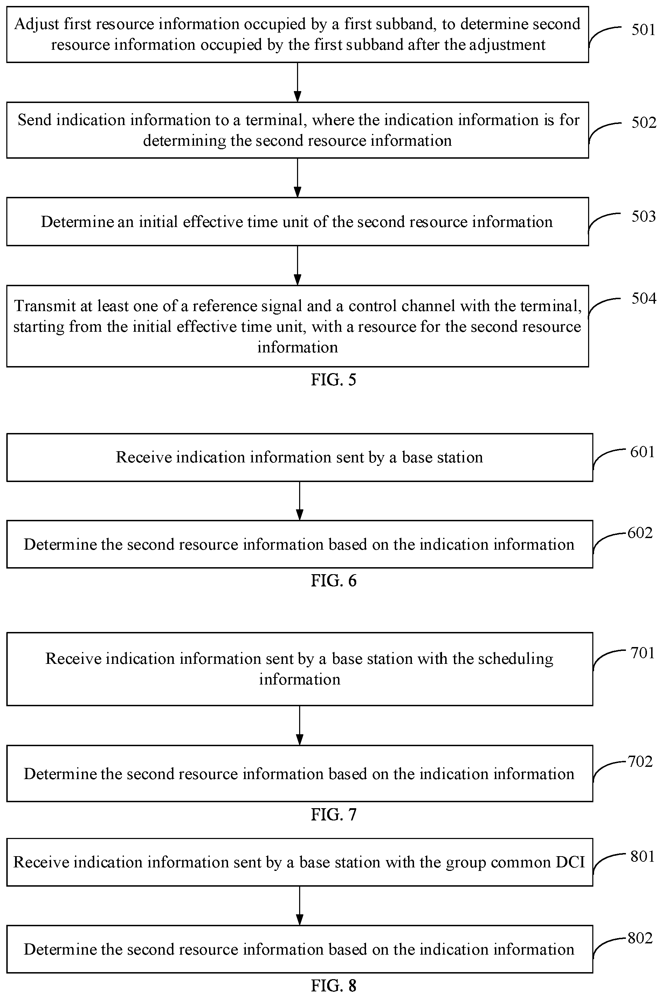

In some optional embodiments, referring to FIG. 5, FIG. 5 is a flowchart of a resource configuration method shown according to an embodiment. The method may be performed by a base station. The method may include the following steps 501-504.

At step 501, first resource information occupied by a first subband is adjusted, to determine second resource information occupied by the first subband after the adjustment.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

At step 502, indication information is sent to a terminal, where the indication information is for determining the second resource information.

In a possible implementation, the base station may send the indication information to the terminal with the scheduling information. The specific implementation is similar to the step 202, and will be not repeated herein.

In another possible implementation, the base station may send the indication information to the terminal with the group common DCI. The specific implementation is similar to the step 302, and will be not repeated herein.

In another possible implementation, the base station may send the indication information to the terminal with the MAC CE. The specific implementation is similar to the step 402, and will be not repeated herein.

At step 503, an initial effective time unit of the second resource information is determined.

In the embodiment of the present disclosure, after the base station sends the indication information for determining the second resource information to the terminal, the second resource information cannot take effect immediately, and needs to wait for the terminal side to receive, parse, and determine the specific information content of the second resource information before it can take effect.

Therefore, the base station side needs to determine an initial effective time unit of the second resource information, so as to transmit information to the terminal starting from the initial effective time unit, with a resource corresponding to the second resource information.

In a possible implementation, the initial effective time unit may be a first time unit associated with the indication information.

Specifically, the first time unit may include any one of: a time unit with an uplink grant indicated by uplink grant information for sending the indication information; a time unit carrying a hybrid automatic repeat request-acknowledge (HARQ-ACK) result of a PDSCH, where the PDSCH is a PDSCH scheduled by downlink assignment information for sending the indication information; a time unit carrying an HARQ-ACK result of group common DCI, where the group common DCI is for sending the indication information; or a time unit carrying an HARQ-ACK result of an MAC CE, where the MAC CE is for sending the indication information.

The first time unit may be a first time unit with an uplink grant indicated by uplink grant information for sending the indication information.

In another possible implementation, the initial effective time unit may be a second time unit after the first time unit and spaced from the first associated time unit by a preset number of time units. The preset number of time units may be a positive integer, which is not limited in the present disclosure.

For example, the first time unit is a slot #m1 with an uplink grant indicated by uplink grant information for sending the indication information, and the initial effective time unit is the slot #m1.

For another example, the first time unit is a slot #m2 carrying an HARQ-ACK result of the PDSCH, and the initial effective time unit is the slot #m2.

For another example, the first time unit is a slot #m3 carrying the HARQ-ACK result of the group common DCI, the preset number of time units is 2, and the initial effective time unit is a slot #(m2+3).

For another example, it is set that the first time unit is a slot #m4 carrying the HARQ-ACK result of the MAC CE, and the second time unit is a slot that is after the first time unit and is spaced from the first associated time unit by 2 slots, it may be determined that the initial effective time unit is a slot #(m4+3).

The above description is merely an exemplary explanation, and the initial effective time unit may also be determined in other manners, which is not limited in the present disclosure.

At step 504, at least one of a reference signal (RS) and a control channel is transmitted with the terminal, starting from the initial effective time unit, with a resource corresponding to the second resource information.

In the embodiment of the present disclosure, the base station may transmit information to the terminal, starting from the initial effective time unit, with a resource corresponding to the second resource information, where the information herein includes but is not limited to at least one of the reference signal or the control channel.

The RS includes but is not limited to a cell-specific reference signal, a channel state information-reference signal (CSI-RS), and the like. The control channel includes but is not limited to a physical uplink control channel (PUCCH), a physical downlink control channel (PDCCH), and the like.

In the above embodiment, the base station may send the indication information to the terminal, so that the terminal determines, based on the indication information, the second resource information occupied by the first subband after the adjustment. Further, the base station may determine the initial effective time unit of the second resource information, and transmit at least one of a reference signal and a control channel to the terminal, starting from the initial effective time unit, with the resource corresponding to the second resource information. In the present disclosure, the resource information occupied by the first subband configured by the network side may be dynamically adjusted, which improves the flexibility of scheduling of the network side during the full-duplex communication, improves a system performance of the full-duplex communication, and has a high availability.

The resource configuration method provided in the present disclosure is described again from a terminal side below.

An embodiment of the present disclosure provides a resource configuration method. Referring to FIG. 6, FIG. 6 is a flowchart of a resource configuration method shown according to an embodiment. The method may be performed by a terminal. The method may include the following steps 601-602.

At step 601, indication information sent by a base station is received.

In an embodiment of the present disclosure, the indication information is for determining the second resource information obtained after adjusting the first resource information occupied by the first subband.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

In the embodiment of the present disclosure, the terminal may receive the indication information sent by the network side.

At step 602, the second resource information is determined based on the indication information.

In the embodiment of the present disclosure, the terminal may determine, based on the indication information sent by the network side, the second resource information occupied by the first subband after the adjustment. The second resource information includes but is not limited to at least one of: the time domain resource information or frequency domain resource information. That is, the terminal may determine, based on the indication information sent by the network side, at least one of the time domain resource information or frequency domain resource information occupied by the first subband after the adjustment.

In a possible implementation, the indication information is the second resource information obtained after the adjustment, that is, the indication information is the second resource information. The terminal directly determines, based on the indication information, the second resource information occupied by the first subband after the adjustment.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, in this embodiment of the present disclosure, types of the index values are resource configuration index values, and resource information corresponding to each of the resource configuration index values is for example shown in Table 1.

The indication information sent by the base station side may be a resource configuration index value used by the first subband after the adjustment. The terminal side may determine, based on Table 1 and the indication information, the second resource information occupied by the first subband after the adjustment.

For example, the resource configuration index value corresponding to the first resource configuration used by the first subband before the adjustment is #1, and the resource configuration index value used by the first subband after the adjustment is #0; therefore, the base station may send the resource configuration index value used by the first subband after the adjustment to the terminal. The terminal side may determine the second resource information occupied by the first subband after the adjustment based on Table 1 and the indication information, that is, the terminal side uses the time domain resource #0 and frequency domain resource #0 corresponding to the resource configuration index value #0 as the second resource information.

For example, the types of the index values are subband index values, and resource information corresponding to each of the subband index values is for example shown in Table 3.

That is, the base station may configure, for the terminal, one or more available subband index values and resource configuration information corresponding to each of the subband index values with RRC signaling.

Further, the base station may send the indication information to the terminal with the scheduling information, where the indication information indicates an activated subband index value after the adjustment. The terminal determines, based on Table 3 and the indication information sent by the base station side, the second resource information occupied by the first subband after the adjustment.

For example, the base station sends the indication information to the terminal with the scheduling information, where an activated subband index value after the adjustment indicated by the indication information is #3, so the terminal determines, based on Table 3, that the second resource configuration information occupied by the first subband after the adjustment includes the time domain resource #3 and the frequency domain resource #3.

The above description is merely an exemplary explanation, and in an actual application, the indication information may further indicate other content, so that the terminal side determines, based on the indication information, the second resource information occupied by the first subband after the adjustment, which is not limited in the present disclosure.

In the above embodiment, the purpose of dynamically adjusting the resource information occupied by the first subband configured by the network side is achieved, which improves the flexibility of scheduling of the network side during the full-duplex communication, improves a system performance of the full-duplex communication, and has a high availability. In some optional embodiments, referring to FIG. 7, FIG. 7 is a flowchart of a resource configuration method shown according to an embodiment. The method may be performed by a terminal. The method may include the following steps 701-702.

At step 701, indication information sent by a base station with the scheduling information is received.

In an embodiment of the present disclosure, the indication information is for determining the second resource information obtained after adjusting the first resource information occupied by the first subband.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

In a possible implementation, the terminal may receive the indication information sent by the base station with the uplink grant information.

In a possible implementation, the terminal may receive the indication information sent by the base station with the uplink grant information for scheduling the physical uplink shared channel.

In a possible implementation, the terminal may receive the indication information sent by the base station with the downlink assignment information.

In a possible implementation, the terminal may receive the indication information sent by the base station with the downlink assignment information for scheduling the PDSCH.

At step 702, the second resource information is determined based on the indication information.

In the embodiment of the present disclosure, the terminal may determine, based on the indication information sent by the network side, the second resource information occupied by the first subband after the adjustment, which includes but is not limited to determining at least one of the time domain resource information or frequency domain resource information occupied by the first subband after the adjustment.

In a possible implementation, the indication information is the second resource information obtained after the adjustment, that is, the indication information is the second resource information. The terminal directly determines, based on the indication information, the second resource information occupied by the first subband after the adjustment.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, in this embodiment of the present disclosure, types of the index values are resource configuration index values, and resource information corresponding to each of the resource configuration index values is for example shown in Table 1.

The indication information sent by the base station side may be a resource configuration index value used by the first subband after the adjustment. The terminal side may determine, based on Table 1 and the indication information, the second resource information occupied by the first subband after the adjustment.

For example, the types of the index values are subband index values, and resource information corresponding to each of the subband index values is for example shown in Table 3.

That is, the base station may configure, for the terminal, one or more available subband index values and resource configuration information corresponding to each of the subband index values with RRC signaling.

Further, the base station may send the indication information to the terminal with the scheduling information, where the indication information indicates an activated subband index value after the adjustment. The terminal determines, based on Table 3 and the indication information sent by the base station side, the second resource information occupied by the first subband after the adjustment.

The above description is merely an exemplary explanation, and in an actual application, the indication information may further indicate other content, so that the terminal side determines, based on the indication information, the second resource information occupied by the first subband after the adjustment, which is not limited in the present disclosure.

In the above embodiment, the purpose of dynamically adjusting the resource information occupied by the first subband configured by the network side is achieved, which improves the flexibility of scheduling of the network side during the full-duplex communication, improves a system performance of the full-duplex communication, and has a high availability.

In some optional embodiments, referring to FIG. 8, FIG. 8 is a flowchart of a resource configuration method shown according to an embodiment. The method may be performed by a terminal. The method may include the following steps 801-802.

At step 801, indication information sent by a base station with the group common downlink control information (DCI) is received.

In an embodiment of the present disclosure, the indication information is for determining the second resource information obtained after adjusting the first resource information occupied by the first subband.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

In a possible implementation, the terminal may receive the indication information sent by the base station with the group common DCI.

In an example, the group common DCI may be of the first format, and may be scrambled by an RNTI of the specified time unit. The first format is a dedicated DCI format for transmitting the indication information, that is, the first format may be different from a DCI format stipulated by an existing protocol, and may be a corresponding DCI format separately defined for transmitting the indication information. The base station sends the indication information to the terminal with the group common DCI of the first format.

In addition, when the indication information is transmitted with the group common DCI of the first format, the group common DCI may be scrambled by an RNTI of the specified time unit, for example, an SBFD-RNTI. In this way, the terminal side determines, based on the SBFD-RNTI, that the group common DCI is a group common DCI for transmitting the indication information.

In another example, the group common DCI may multiplex a second format, and the second format may be an existing DCI format in a protocol, for example, a DCI format 0_2.

Of course, the group common DCI for transmitting the indication information may also multiplex other DCI formats in the protocol, which is not limited in the present disclosure.

In a possible implementation, to ensure a reliability of transmission of the indication information, after the terminal receives the indication information sent with the group common DCI, the terminal reports an HARQ-ACK result of the group common DCI to the base station.

The base station determines, based on the HARQ-ACK result, whether the terminal successfully receives the group common DCI, and if the terminal does not successfully receive the group common DCI, the base station may send the group common DCI carrying the indication information to the terminal again in a repeat manner.

At step 802, the second resource information is determined based on the indication information.

In the embodiment of the present disclosure, the terminal may determine, based on the indication information sent by the network side, the second resource information occupied by the first subband after the adjustment, which includes but is not limited to determining at least one of the time domain resource information or frequency domain resource information occupied by the first subband after the adjustment.

In a possible implementation, the indication information is the second resource information obtained after the adjustment, that is, the indication information is the second resource information. The terminal directly determines, based on the indication information, the second resource information occupied by the first subband after the adjustment.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, in this embodiment of the present disclosure, types of the index values are resource configuration index values, and resource information corresponding to each of the resource configuration index values is for example shown in Table 1.

The indication information sent by the base station side may be a resource configuration index value used by the first subband after the adjustment. The terminal side may determine, based on Table 1 and the indication information, the second resource information occupied by the first subband after the adjustment.

For example, the types of the index values are subband index values, and resource information corresponding to each of the subband index values is for example shown in Table 3.

That is, the base station may configure, for the terminal, one or more available subband index values and resource configuration information corresponding to each of the subband index values with RRC signaling.

Further, the base station may send the indication information to the terminal with the scheduling information, where the indication information indicates an activated subband index value after the adjustment. The terminal determines, based on Table 3 and the indication information sent by the base station side, the second resource information occupied by the first subband after the adjustment.

The above description is merely an exemplary explanation, and in an actual application, the indication information may further indicate other content, so that the terminal side determines, based on the indication information, the second resource information occupied by the first subband after the adjustment, which is not limited in the present disclosure.

In the above embodiment, the purpose of dynamically adjusting the resource information occupied by the first subband configured by the network side is achieved, which improves the flexibility of scheduling of the network side during the full-duplex communication, improves a system performance of the full-duplex communication, and has a high availability.

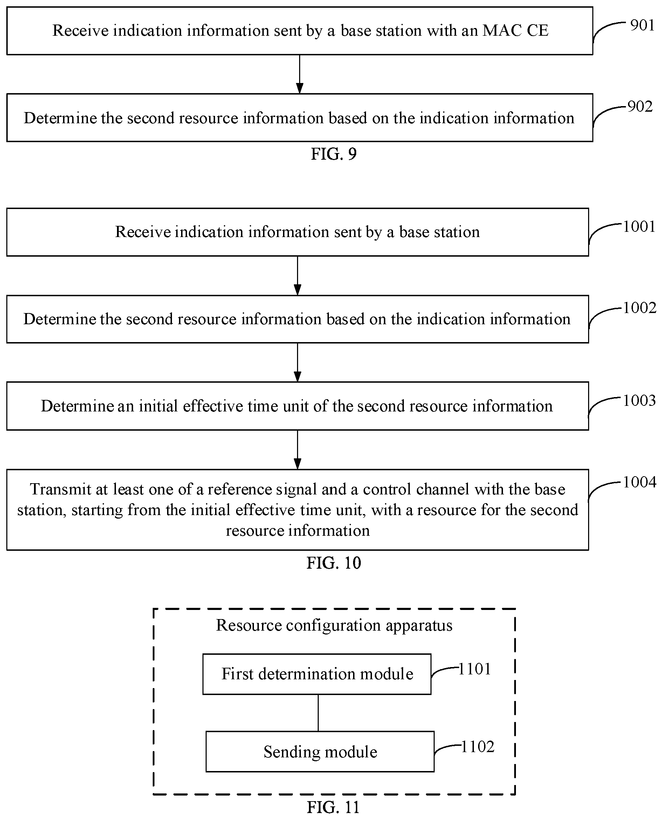

In some optional embodiments, referring to FIG. 9, FIG. 9 is a flowchart of a resource configuration method shown according to an embodiment. The method may be performed by a terminal. The method may include the following steps 901-902.

At step 901, indication information sent by a base station with an MAC CE is received.

In an embodiment of the present disclosure, the indication information is for determining the second resource information obtained after adjusting the first resource information occupied by the first subband.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

In the embodiment of the present disclosure, the base station may send the indication information to the terminal with the MAC CE.

At step 902, the second resource information is determined based on the indication information.

In the embodiment of the present disclosure, the terminal may determine, based on the indication information sent by the network side, the second resource information occupied by the first subband after the adjustment, which includes but is not limited to determining at least one of the time domain resource information or frequency domain resource information occupied by the first subband after the adjustment.

In a possible implementation, the indication information is the second resource information obtained after the adjustment, that is, the indication information is the second resource information. The terminal directly determines, based on the indication information, the second resource information occupied by the first subband after the adjustment.

In another possible implementation, the base station side may configure in advance, for the terminal, one or more index values available for the first subband and resource information corresponding to each of the index values.

Optionally, the base station side may configure, with RRC signaling, the one or more index values available for the first subband and the resource information corresponding to each of the index values.

For example, in this embodiment of the present disclosure, types of the index values are resource configuration index values, and resource information corresponding to each of the resource configuration index values is for example shown in Table 1.

The indication information sent by the base station side may be a resource configuration index value used by the first subband after the adjustment. The terminal side may determine, based on Table 1 and the indication information, the second resource information occupied by the first subband after the adjustment.

For example, the types of the index values are subband index values, and resource information corresponding to each of the subband index values is for example shown in Table 3.

That is, the base station may configure, for the terminal, one or more available subband index values and resource configuration information corresponding to each of the subband index values with RRC signaling.

Further, the base station may send the indication information to the terminal with the scheduling information, where the indication information indicates an activated subband index value after the adjustment. The terminal determines, based on Table 3 and the indication information sent by the base station side, the second resource information occupied by the first subband after the adjustment.

The above description is merely an exemplary explanation, and in an actual application, the indication information may further indicate other content, so that the terminal side determines, based on the indication information, the second resource information occupied by the first subband after the adjustment, which is not limited in the present disclosure.

In the above embodiment, the purpose of dynamically adjusting the resource information occupied by the first subband configured by the network side is achieved, which improves the flexibility of scheduling of the network side during the full-duplex communication, improves a system performance of the full-duplex communication, and has a high availability.

In some optional embodiments, referring to FIG. 10, FIG. 10 is a flowchart of a resource configuration method shown according to an embodiment. The method may be performed by a terminal. The method may include the following steps 1001-1004.

At step 1001, indication information sent by a base station is received.

In an embodiment of the present disclosure, the indication information is for determining the second resource information obtained after adjusting the first resource information occupied by the first subband.

In the embodiment of the present disclosure, before or after adjusting the resource information occupied by the first subband, the first subband in a time domain is always within a specified time unit, and a transmission direction of information on the first subband is different from a transmission direction of the information on the specified time unit.

The information includes but is not limited to the signaling, the signals, the data, etc.

In the embodiment of the present disclosure, the specified time unit may be an SBFD time unit. The information may be transmitted in different transmission directions in the SBFD time unit.

For example, the SBFD time unit may be a downlink time unit including an uplink subband, a flexible time unit including the uplink subband, an uplink time unit including a downlink subband, or a flexible time unit including the downlink subband, which is not limited in the present disclosure.

The specified time unit may be in a unit of a slot, a symbol, a span, etc., which is not limited in the present disclosure. One span includes a plurality of consecutive symbols.

In the embodiment of the present disclosure, the first subband may be a downlink subband in an uplink time unit or a flexible time unit, or the first subband may be an uplink subband in a downlink time unit or the flexible time unit, which is not limited in the present disclosure.

In a possible implementation, the base station may dynamically adjust, according to at least one of a service load condition on the network side, an interference condition, and a service type of the terminal, the first resource information occupied by the first subband, to determine the second resource information occupied by the first subband after the adjustment.

In a possible implementation, the first resource information includes but is not limited to at least one of: time domain resource information or frequency domain resource information.

The second resource information includes but is not limited to at least one of: the time domain resource information or frequency domain resource information.

In a possible implementation, the terminal may receive the indication information sent by the base station with the scheduling information. The specific implementation is similar to the step 602, and will be not repeated herein.

In another possible implementation, the terminal may receive the indication information sent by the base station with the group common DCI. The specific implementation is similar to the step 702, and will be not repeated herein.

In another possible implementation, the terminal may receive the indication information sent by the base station with the MAC CE. The specific implementation is similar to the step 802, and will be not repeated herein.

At step 1002, the second resource information is determined based on the indication information.

The determining manner have been described in the above embodiments, and will be not repeated herein.

At step 1003, an initial effective time unit of the second resource information is determined.

In a possible implementation, after the base station sends the indication information for determining the second resource information to the terminal, the second resource information cannot take effect immediately, and needs to wait for the terminal side to receive, parse, and determine the specific information content of the second resource information before it can take effect.

Therefore, the terminal side needs to determine an initial effective time unit of the second resource information, so as to subsequently transmit information to the base station starting from the initial effective time unit, with a resource corresponding to the second resource information.

In a possible implementation, the initial effective time unit may be a first time unit associated with the indication information.

Specifically, the first time unit may include any one of: a time unit with an uplink grant indicated by uplink grant information for sending the indication information; a time unit carrying a hybrid automatic repeat request-acknowledge (HARQ-ACK) result of a PDSCH, where the PDSCH is a PDSCH scheduled by downlink assignment information for sending the indication information; a time unit carrying an HARQ-ACK result of group common DCI, where the group common DCI is for sending the indication information; or a time unit carrying an HARQ-ACK result of an MAC CE, where the MAC CE is for sending the indication information.

The first time unit may be a first time unit with an uplink grant indicated by uplink grant information for sending the indication information.

In another possible implementation, the initial effective time unit may be a second time unit after the first time unit and spaced from the first associated time unit by a preset number of time units. The preset number of time units may be a positive integer, which is not limited in the present disclosure.

At step 1004, at least one of a reference signal and a control channel is transmitted with the base station, starting from the initial effective time unit, with a resource corresponding to the second resource information.

In the embodiment of the present disclosure, the terminal may transmit information to the base station, starting from the initial effective time unit, with a resource corresponding to the second resource information, where the information herein includes but is not limited to at least one of the reference signal or the control channel. The RS includes but is not limited to a cell-specific reference signal, a CSI-RS, etc. The control channel includes, but is not limited to, a USCH, a PDCCH, etc.

In the above embodiment, the base station may send the indication information to the terminal, so that the terminal determines, based on the indication information, the second resource information occupied by the first subband after the adjustment. Further, the terminal may determine the initial effective time unit of the second resource information, and transmit at least one of a reference signal and a control channel to the base station, starting from the initial effective time unit, with the resource corresponding to the second resource information. In the present disclosure, the resource information occupied by the first subband configured by the network side may be dynamically adjusted, which improves the flexibility of scheduling of the network side during the full-duplex communication, improves a system performance of the full-duplex communication, and has a high availability.

The resource configuration method provided in the present disclosure is further described through examples below.

In a first embodiment, it is set that the terminal is a Rel-18 terminal and a subsequent version of terminal, and has a half-duplex capability or a full-duplex capability, which is not limited in the present disclosure. It is set that the base station side performs a full-duplex operation on the semi-static DL symbol of the TDD frequency band or the DL symbol indicated by the SFI, that is, simultaneously schedules downlink data and uplink data. It should be noted that the base station side may also perform a full-duplex operation on the semi-static UL symbol of the TDD frequency band or the UL symbol indicated by the SFI, that is, simultaneously schedule the downlink data and the uplink data. The semi-static flexible symbol is determined through TDD-UL-DL-ConfigurationCommon sent by the base station or the TDD-UL-DL-configuration common and TDD-UL-DL-ConfigurationDedicated.

In this embodiment, it is set that the slot structure configured by the base station through the TDD-UL-DL configuration is the DDDFU, that is, in a TDD configuration period, the first 3 slots are DL slots, the 4-th slot is a flexible slot, and the 5-th slot is a UL slot. Of course, the method of this embodiment may also be directly applied to other TDD-UL-DL slot structures, which is not limited in the present disclosure.

Considering requirements, such as the service load on the network side, the interference condition, and the service type of the terminal, the base station side dynamically adjusts resource information of a first subband in a specified time unit, for example, an SBFD slot, through dynamic signaling.

In this embodiment, the base station instructs, through the following method, the second resource information occupied by the first subband in the SBFD slot after the adjustment.

The base station uses the scheduling information to carry the indication information, so that the terminal determines the second resource information occupied by the first subband in the SBFD slot.

The scheduling information may be the uplink grant information or downlink assignment information.

Further, the uplink grant information is for scheduling a PUSCH, and the downlink assignment information is for scheduling a PDSCH.

In the embodiment of the present disclosure, the base station and the terminal transmit at least one of the reference signal and the control channel on the first subband with the resource corresponding to the second resource information.

In an example, the indication information is the second resource information.

In another example, the base station configures, with the RRC signaling, resource information corresponding to each resource configuration index value, for example, as shown in Table 1. Alternatively, the base station configures, with the RRC signaling, resource information corresponding to each subband index value, for example, for example, as shown in Table 3.

The indication information indicates a resource configuration index value used by the first subband after the adjustment; or the indication information indicates an activated subband index value after the adjustment.

In this embodiment, for example, the base station instructs the first subband in the SBFD slot with the dynamic signaling, for example, the scheduling information, and the first subband is an UL subband. The base station instructs, with the indication information of N bits carried in the UL grant for scheduling the PUSCH or the DL assignment for scheduling the PDSCH, the second resource information occupied by the UL subband in the SBFD slot after the adjustment. The second resource information may include a frequency domain resource, a time domain resource, or a time-frequency domain resource, which is not limited in this embodiment.

When the base station instructs the UL subband in the SBFD slot with the UL subband indication in the UL grant, the initial effective time unit of the second configuration information of the uplink subband is a slot indicated by the UL grant.

When the base station instructs the UL subband in the SBFD slot with the UL subband indication in the DL assignment, the initial effective time unit of the subband indication is a slot in which the HARQ-ACK result of the PDSCH scheduled by the DL assignment is located.

Further, the base station configures Table 1 or Table 3 with the RRC signaling. For example, the base station configures M available index values of the uplink subband, and the types of the index values may be resource configuration index values. The length of the UL subband indication carried, by the base station, in the UL grant or the DL assignment is log2(M) bits. A relationship of corresponding the bit value of the indication information sent by the base station to the indicated resource configuration index value is for example shown in Table 2. M refers to the total number of available resource configuration index values.

Alternatively, the length of the UL subband indication carried, by the base station, in the UL grant or the DL assignment is log2(N) bits, where N refers to the total number of available subband index values. A relationship of corresponding the bit value of the indication information sent by the base station to the indicated subband index value may be for example shown in Table 4.

In a second embodiment, it is set that the terminal is a Rel-18 terminal and a subsequent version of terminal, and has a half-duplex capability or a full-duplex capability, which is not limited in the present disclosure. It is set that the base station side performs a full-duplex operation on the semi-static DL symbol of the TDD frequency band or the DL symbol indicated by the SFI, that is, simultaneously schedules downlink data and uplink data. It should be noted that the base station side may also perform a full-duplex operation on the semi-static UL symbol of the TDD frequency band or the UL symbol indicated by the SFI, that is, simultaneously schedule the downlink data and the uplink data. The semi-static flexible symbol is determined through TDD-UL-DL-ConfigurationCommon sent by the base station or the TDD-UL-DL-configuration common and TDD-UL-DL-ConfigurationDedicated.

In this embodiment, it is set that the slot structure configured by the base station through the TDD-UL-DL configuration is the DDDFU, that is, in a TDD configuration period, the first 3 slots are DL slots, the 4-th slot is a flexible slot, and the 5-th slot is a UL slot. Of course, the method of this embodiment may also be directly applied to other TDD-UL-DL slot structures, which is not limited in the present disclosure.

Considering requirements, such as the service load on the network side, the interference condition, and the service type of the terminal, the base station side dynamically adjusts resource information of a first subband in a specified time unit, for example, an SBFD slot, through dynamic signaling.

In this embodiment, the base station instructs, through the following method, the second resource information occupied by the first subband in the SBFD slot after the adjustment.

The base station uses the group common DCI to carry the indication information, so that the terminal determines the second resource information occupied by the first subband in the SBFD slot.

The group common DCI is a newly introduced DCI format and is scrambled by an SBFD-RNTI.

Alternatively, the group common DCI is a DCI format defined in a current protocol, for example, a DCI format 2-0, which is not limited in the present disclosure.

Further, the terminal feeds back for a HARQ-ACK result of the group common DCI, to ensure the reliability of transmission of the indication information.

In this embodiment, for example, the base station instructs the first subband in the SBFD slot with the UL subband indication carried in the DCI format 2_0, and the first subband is an UL subband. The second resource information may include a frequency domain resource, a time domain resource, or a time-frequency domain resource, which is not limited in this embodiment.

When the base station instructs the UL subband in the SBFD slot with the UL subband indication in the DCI format 2_0, the initial effective time unit of the second configuration information of the uplink subband may be a time unit carrying the HARQ-ACK result of the group common DCI, where the group common DCI is for sending the indication information.

Further, the base station configures Table 1 or Table 3 with the RRC signaling. For example, the base station configures M available index values of the uplink subband, and the types of the index values may be resource configuration index values. The length of the UL subband indication carried, by the base station, in the UL grant or the DL assignment is log2(M) bits. A relationship of corresponding the bit value of the indication information sent by the base station to the indicated resource configuration index value is for example shown in Table 2. M refers to the total number of available resource configuration index values.

Alternatively, the length of the UL subband indication carried, by the base station, in the UL grant or the DL assignment is log2(N) bits, where N refers to the total number of available subband index values. A relationship of corresponding the bit value of the indication information sent by the base station to the indicated subband index value may be for example shown in Table 4.

In a third embodiment, it is set that the terminal is a Rel-18 terminal and a subsequent version of terminal, and has a half-duplex capability or a full-duplex capability, which is not limited in the present disclosure. It is set that the base station side performs a full-duplex operation on the semi-static DL symbol of the TDD frequency band or the DL symbol indicated by the SFI, that is, simultaneously schedules downlink data and uplink data. It should be noted that the base station side may also perform a full-duplex operation on the semi-static UL symbol of the TDD frequency band or the UL symbol indicated by the SFI, that is, simultaneously schedule the downlink data and the uplink data. The semi-static flexible symbol is determined through TDD-UL-DL-ConfigurationCommon sent by the base station or the TDD-UL-DL-configuration common and TDD-UL-DL-ConfigurationDedicated.

In this embodiment, it is set that the slot structure configured by the base station through the TDD-UL-DL configuration is the DDDFU, that is, in a TDD configuration period, the first 3 slots are DL slots, the 4-th slot is a flexible slot, and the 5-th slot is a UL slot. Of course, the method of this embodiment may also be directly applied to other TDD-UL-DL slot structures.

Considering requirements, such as the service load on the network side, the interference condition, and the service type of the terminal, the base station side dynamically adjusts a subband configuration in an SBFD slot through dynamic signaling.

In this embodiment, the base station instructs, through the following method, the second resource information occupied by the first subband in the SBFD slot after the adjustment.

The base station uses the MAC CE to carry the indication information, so that the terminal determines the second resource information occupied by the first subband in the SBFD slot.

The initial effective time unit of the second configuration information of the uplink subband is a second time unit after the first time unit in which the HARQ-ACK result of the MAC CE is located, for example, the third slot after the first time unit.

The MAC CE may directly carry the second resource information. Alternatively, the MAC CE may carry indication information, and the indication information indicates a resource configuration index value used by the first subband after the adjustment; or the indication information indicates an activated subband index value after the adjustment. Specific implementations have been described in the above embodiments, and will be not repeated herein.

In the above embodiment, the base station may dynamically adjust the first resource information occupied by the first subband, to determine second resource information occupied by the first subband after the adjustment, and send indication information to the terminal; and the terminal may determine, based on the indication information, the second resource information occupied by the first subband after the adjustment. The first subband in a time domain is always within a specified time unit, and a transmission direction of information on the first subband is different from a transmission direction of the information on the specified time unit. In the present disclosure, the resource information occupied by the first subband configured by the network side may be dynamically adjusted, which therefore improves the flexibility of scheduling of the network side during the full-duplex communication, improves a system performance of the full-duplex communication, and has a high availability.

Corresponding to the above embodiments of application function implementation methods, the present disclosure further provides embodiments of application function implementation apparatuses.

Referring to FIG. 11, FIG. 11 is a block diagram of a resource configuration apparatus shown according to an exemplary embodiment. The apparatus is applied to a base station and includes:
a first determination module 1101, configured to adjust first resource information occupied by a first subband, to determine second resource information occupied by the first subband after the adjustment, where the first subband in a time domain is always within a specified time unit, and a transmission direction of information on the first subband is different from a transmission direction of the information on the specified time unit; and
a sending module 1102, configured to send indication information to a terminal, where the indication information is for determining the second resource information.

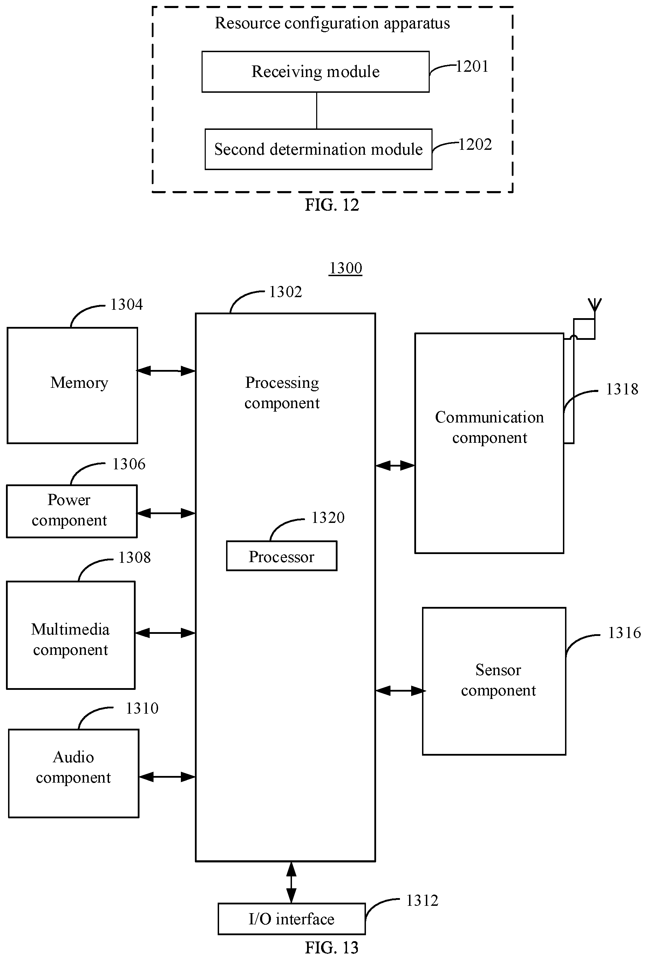

Referring to FIG. 12, FIG. 12 is a block diagram of a resource configuration apparatus shown according to an exemplary embodiment. The apparatus is applied to a terminal and includes:
a receiving module 1201, configured to receive indication information sent by a base station, where the indication information is for determining second resource information obtained after first resource information occupied by a first subband is adjusted, where the first subband in a time domain is always within a specified time unit, and a transmission direction of information on the first subband is different from a transmission direction of the information on the specified time unit; and
a second determination module 1202, configured to determine the second resource information based on the indication information.

Since the embodiments of the apparatuses substantially corresponds to the embodiments of the methods, and the related contents may refer to the description of the embodiments of the methods. The apparatus embodiments described above are only schematic. The units explained as separate components may be or may not be physically separated, and the components displayed as units may be or may not be physical units, that is, they may be located in one place or may be distributed across multiple network units. A part or all of modules may be selected according to actual needs to achieve the purpose of the solutions in the present disclosure. Those skilled in the art may understand and implement other embodiments without a creative work.

Correspondingly, the present disclosure further provides a resource configuration apparatus, including:
a processor; and
a memory configured to store instructions executable by the processor;
where the processor is configured to perform any one resource configuration method for the base station side.

As shown in FIG. 13, FIG. 13 is a schematic structural diagram of a resource configuration apparatus 1300 shown according to an exemplary embodiment. The apparatus 1300 may be provided as the base station. Referring to FIG. 13, the apparatus 1300 includes a processing component 1322, a wireless transmit/receive component 1324, an antenna component 1326, and a signal processing part specific to a wireless interface. The processing component 1322 may further include at least one processor.

One processor of the processing component 1322 may be configured to perform the above any one resource configuration method.

Correspondingly, the present disclosure further provides a resource configuration apparatus, including:
a processor; and
a memory configured to store instructions executable by the processor;
where the processor is configured to perform any one resource configuration method for the terminal side.

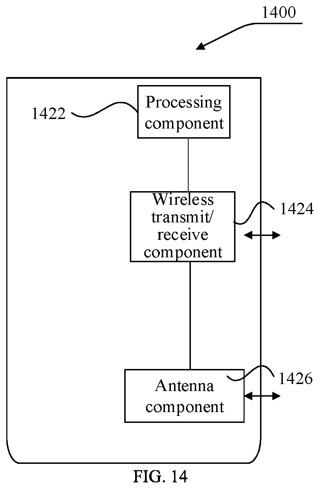

FIG. 14 is a block diagram of a resource configuration apparatus 1400 shown according to an exemplary embodiment. For example, the apparatus 1400 may be a terminal, such as a mobile phone, a tablet computer, an e-book reader, a multimedia playing device, a wearable device, a vehicle-mounted user equipment, an ipad, a smart television, etc.

Referring to FIG. 14, the apparatus 1400 may include one or more of the following components: a processing component 1402, a memory 1404, a power component 1406, a multimedia component 1408, an audio component 1410, an input/output (I/O) interface 1412, a sensor component 1416, and a communication component 1418.

The processing component 1402 typically controls the overall operation of the apparatus 1400, such as operations associated with display, phone calls, data random accesses, camera operations, and recording operations. The processing component 1402 may include one or more processors 1420 to execute instructions to complete all or part of the steps in the above resource configuration method. Additionally, the processing component 1402 may include one or more modules to facilitate interaction between the processing component 1402 and other components. For example, the processing component 1402 may include a multimedia module to facilitate interaction between the multimedia component 1408 and the processing component 1402. For another example, the processing component 1402 may read executable instructions from a memory, to implement steps of the resource configuration methods provided in the above various embodiments.

The memory 1404 is configured to store various types of data to support operations of the apparatus 1400. Examples of such data include instructions, contact data, phonebook data, messages, pictures, videos, etc., for any application program or method operating on the apparatus 1400. The memory 1404 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1406 provides power to various components of the apparatus 1400. The power component 1406 may include a power supply management system, one or more power supplies, and other components that are associated with generating, managing, and distributing power for the apparatus 1400.

The multimedia component 1408 includes a display screen providing an output interface between the apparatus 1400 and the user. In some embodiments, the multimedia component 1408 includes a front facing camera and/or a rear facing camera. When the apparatus 1400 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 1410 is configured to output and/or input audio signals. For example, the audio component 1410 includes a microphone (MIC). The microphone is configured for receiving external audio signals when the apparatus 1400 is in the operating mode, such as a call mode, a recording mode, and a speech recognition mode. The received audio signals may be further stored in the memory 1404 or sent via the communication component 1418. In some embodiments, the audio component 1410 also includes a speaker for outputting the audio signals.

The I/O interface 1412 provides an interface between the processing component 1402 and peripheral interface modules. The peripheral interface modules can be keyboards, click wheels, buttons, etc. These buttons may include but are not limited to: a home button, a volume button, a start button, and a lock button.

The sensor component 1416 includes one or more sensors to provide various aspects of state assessment for the apparatus 1400. For example, the sensor component 1416 may detect an open/closed state of the apparatus 1400, relative positioning of components that are for example a display and keypad of the apparatus 1400. The sensor component 1416 may also detect a position change of the apparatus 1400 or of a component of the apparatus 1400, presence or absence of the user contacting with the apparatus 1400, an orientation or acceleration/deceleration of the apparatus 1400, and a temperature change of the apparatus 1400. The sensor component 1416 may include a proximity sensor configured to detect the presence of nearby objects without any physical contact. The sensor component 1416 may also include a light sensor, such as a CMOS or CCD image sensor, for use in an imaging application. In some embodiments, the sensor component 1416 may also include an acceleration sensor, a gyroscope sensor, a magnetic sensor, a pressure sensor, or a temperature sensor.

The communication component 1418 is configured for facilitating wired or wireless communication between the apparatus 1400 and other devices. The apparatus 1400 may access a wireless network based on a communication standard, such as Wi-Fi, 2G, 3G, 4G, 5G, 6G, or a combination of them. In an exemplary embodiment, the communication component 1418 receives, via a broadcast channel, a broadcast signal or broadcast related information from an external broadcast management system. In an exemplary embodiment, the communication component 1418 further includes a near-field communication (NFC) module to facilitate shortrange communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 1400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform any one resource configuration method for the terminal side.

In an exemplary embodiment, a non-transitory machine-readable storage medium including instructions is also provided, such as the memory 1404 including the instructions. The above instructions may be executed by the processor 1420 of the apparatus 1400 to complete the above resource configuration method. For example, the non-transitory computerreadable storage medium may be a ROM, a random access memory (RAM), a CD-ROM, a magnetic tape, a floppy disk, an optical data storage device, etc.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. A resource configuration method, performed by a base station and comprising:
adjusting first resource information occupied by a first subband, to determine second resource information occupied by the first subband after the adjustment, wherein the first subband in a time domain is always within a specified time unit, and a transmission direction of information on the first subband is different from a transmission direction of the information on the specified time unit; and
sending indication information to a terminal, wherein the indication information is for determining the second resource information.

2. The method of claim 1, wherein the sending indication information to the terminal, comprises:
sending the indication information to the terminal with scheduling information.

3. The method of claim 2, wherein the sending the indication information to the terminal with scheduling information, comprises:
sending the indication information to the terminal with uplink grant information; or
sending the indication information to the terminal with downlink assignment information.

4. The method of claim 3, wherein
the uplink grant information is for scheduling a physical uplink shared channel, PUSCH; and/or
the downlink assignment information is for scheduling a physical downlink shared channel, PDSCH.

5. The method of claim 1, wherein the sending indication information to the terminal, comprises:
sending the indication information to the terminal with group common downlink control information, DCI.

6. The method of claim 5, wherein
the group common DCI is of a first format and is scrambled by a radio network temporary identity, RNTI, of the specified time unit, wherein the first format is a DCI format for transmitting the indication information; or
the group common DCI multiplexes a second format.

7. The method of claim 1, wherein the sending indication information to the terminal, comprises:
sending the indication information to the terminal with a media access control control element, MAC CE.

8. The method of any one of claims 1 to 7, wherein the indication information is the second resource information.

9. The method of any one of claims 1 to 7, further comprising:
sending, to the terminal, one or more index values available for the first subband and resource information corresponding to each of the one or more index values with radio resource control, RRC, signaling.

10. The method of claim 9, wherein
the indication information indicates a resource configuration index value used by the first subband after the adjustment; or
the indication information indicates an activated subband index value after the adjustment.

11. The method of any one of claims 1 to 7, further comprising:
determining an initial effective time unit of the second resource information; and
transmitting, starting from the initial effective time unit and with a resource corresponding to the second resource information, at least one of a reference signal and a control channel to the terminal.

12. The method of claim 11, wherein the initial effective time unit comprises:
a first time unit associated with the indication information; or
a second time unit after the first time unit and spaced from the first associated time unit by a preset number of time units.

13. The method of claim 11, wherein the first time unit comprises any one of:
a time unit with an uplink grant indicated by uplink grant information for sending the indication information;
a time unit carrying a hybrid automatic repeat request-acknowledge, HARQ-ACK, result of a PDSCH, wherein the PDSCH is a PDSCH scheduled by downlink assignment information for sending the indication information;
a time unit carrying an HARQ-ACK result of group common DCI, wherein the group common DCI is for sending the indication information; or
a time unit carrying an HARQ-ACK result of an MAC CE, wherein the MAC CE is for sending the indication information.

14. A resource configuration method, performed by a terminal and comprising:
receiving indication information sent by a base station, wherein the indication information is for determining second resource information obtained after first resource information occupied by a first subband is adjusted, wherein the first subband in a time domain is always within a specified time unit, and a transmission direction of information on the first subband is different from a transmission direction of the information on the specified time unit; and
determining the second resource information based on the indication information.

15. The method of claim 14, wherein the receiving indication information sent by the base station, comprises:
receiving the indication information sent by the base station with scheduling information.

16. The method of claim 15, wherein the receiving the indication information sent by the base station with scheduling information, comprises:
receiving the indication information sent by the base station with uplink grant information; or
receiving the indication information sent by the base station with downlink assignment information.

17. The method of claim 16, wherein
the uplink grant information is for scheduling a physical uplink shared channel, PUSCH; and/or
the downlink assignment information is for scheduling a physical downlink shared channel, PDSCH.

18. The method of claim 14, wherein the receiving indication information sent by the base station, comprises:
receiving the indication information sent by the base station with group common downlink control information, DCI.

19. The method of claim 18, wherein
the group common DCI is of a first format and is scrambled by a radio network temporary identity, RNTI, of the specified time unit, wherein the first format is a DCI format for transmitting the indication information; or
the group common DCI multiplexes a second format.

20. The method of claim 18, further comprising:
sending a hybrid automatic repeat request-acknowledge, HARQ-ACK, result of the group common DCI to the base station.

21. The method of claim 14, wherein the receiving indication information sent by the base station, comprises:
receiving the indication information sent by the base station with a media access control control element, MAC CE.

22. The method of any one of claims 14 to 21, wherein the indication information is the second resource information.

23. The method of any one of claims 14 to 21, further comprising:
receiving one or more index values available for the first subband and resource information corresponding to each of the one or more index values sent by the base station with radio resource control, RRC, signaling.

24. The method of claim 23, wherein
the indication information indicates a resource configuration index value used by the first subband after the adjustment; or
the indication information indicates an activated subband index value after the adjustment.

25. The method of any one of claims 14 to 21, further comprising:
determining an initial effective time unit of the second resource information; and
transmitting, starting from the initial effective time unit and with a resource corresponding to the second resource information, at least one of a reference signal and a control channel to the base station.

26. The method of claim 25, wherein the initial effective time unit comprises:
a first time unit associated with the indication information; or
a second time unit after the first time unit and spaced from the first associated time unit by a preset number of time units.

27. The method of claim 26, wherein the first time unit comprises any one of:
a time unit with an uplink grant indicated by uplink grant information for sending the indication information;
a time unit carrying an HARQ-ACK result of a PDSCH, wherein the PDSCH is a PDSCH scheduled by downlink assignment information for sending the indication information;
a time unit carrying an HARQ-ACK result of group common DCI, wherein the group common DCI is for sending the indication information; or
a time unit carrying an HARQ-ACK result of an MAC CE, wherein the MAC CE is for sending the indication information.

28. A resource configuration apparatus, applied to a base station and comprising:
a first determination module, configured to adjust first resource information occupied by a first subband, to determine second resource information occupied by the first subband after the adjustment, wherein the first subband in a time domain is always within a specified time unit, and a transmission direction of information on the first subband is different from a transmission direction of the information on the specified time unit; and
a sending module, configured to send indication information to a terminal, wherein the indication information is for determining the second resource information.

29. A resource configuration apparatus, applied to a terminal and comprising:
a receiving module, configured to receive indication information sent by a base station, wherein the indication information is for determining second resource information obtained after first resource information occupied by a first subband is adjusted, wherein the first subband in a time domain is always within a specified time unit, and a transmission direction of information on the first subband is different from a transmission direction of the information on the specified time unit; and
a second determination module, configured to determine the second resource information based on the indication information.

30. A resource configuration apparatus, comprising:
a processor; and
a memory configured to store instructions executable by the processor;
wherein the processor is configured to perform the resource configuration method of any one of claims 1 to 13.

31. A resource configuration apparatus, comprising:
a processor; and
a memory configured to store instructions executable by the processor;
wherein the processor is configured to perform the resource configuration method of any one of claims 14 to 27.
